# EUROPÄISCHE PATENTSCHRIFT

(11) **EP 0 641 182 B1**
(45) Veröffentlichungstag und Bekanntmachung des Hinweises auf die Patenterteilung: **19.11.1997**
(21) Anmeldenummer: 94908971.8
(22) Anmeldetag: 12.03.1994
(51) Int. Cl.: A61C 17/32, A61C 17/40

(54) **AUFSTECKVORRICHTUNG FÜR EINEN ELEKTRISCHEN ZAHNBÜRSTENANTRIEB**
PLUG-IN DEVICE FOR AN ELECTRIC TOOTHBRUSH DRIVE
DISPOSITIF D'ENFICHAGE POUR UN ENTRAINEMENT ELECTRIQUE DE BROSSE A DENTS

(30) Priorität: 20.03.1993 DE 9304184 U
(43) Veröffentlichungstag der Anmeldung: 08.03.1995
(73) Patentinhaber: ROWENTA-WERKE GmbH, D-63071 Offenbach am Main (DE)
(72) Erfinder: MERBACH, Lothar, D-60598 Frankfurt (DE)
(86) Internationale Anmeldenummer: DE9400264
(87) Internationale Veröffentlichungsnummer: WO9421193

(56) Entgegenhaltungen:
- EP-A- 0 357 863
- WO-A-94/03125

## Beschreibung

Die Erfindung bezieht sich auf eine Aufsteckvorrichtung für einen elektrischen Zahnbürstenantrieb mit einem Gehäuse sowie einem im Gehäuse angeordneten Bewegungswandler.

Aus der EP-OS 0 357 863 ist eine elektrische Zahnbürste bekannt mit einem Triebwerk, bestehend aus Elektromotor und einem zwischen diesem und der Aufsteckwelle angeordneten Bewegungswandler sowie einem als Aufstecker ausgebildeten Bürstenkörper. Der Bewegungswandler versetzt die Aufsteckwelle in eine Radial- und eine Longitudinalbewegung. Der Motor und der Bewegungswandler sind in einem Gehäuse angeordnet. Im Einbauzustand ist der Aufstecker drehbar mit dem Gehäuse des Zahnbürstentriebwerks verbunden. Im Aufstecker ist ein Schwingarm derart gelagert, daß der Schwingarm nur longitudinale, jedoch keine radialen Bewegungen ausführen kann. Der Schwingarm ist über eine Rastverbindung mit der Aufsteckachse des elektrischen Triebwerks lösbar verbunden. Im Aufstecker sind mehrere Bürsten gelagert, die von dem Schwingarm mittels Exzenterantrieb in eine Radialbewegung versetzt werden. Im Betrieb wird die Bewegung der Aufsteckachse derart übertragen, daß der gesamte Aufstecker Radialbewegungen ausführt, während die Longitudinalbewegungen des Schwingarms nach Umsetzung am Exzentertrieb die Bürsten zusätzlich weitere Radialbewegungen ausführen läßt. Da sowohl der gesamte Aufstecker, d. h. Gehäuse und Bürsten, als auch die Bürsten zusätzliche Radialbewegungen ausführen, besteht selbst bei Anbringung nur einer Bürste wegen dieser Radialbewegungen keine Möglichkeit, die Zahnzwischenräume zu reinigen oder die Zähne zu polieren. Darüber hinaus ist der Energieaufwand für das Triebwerk sehr groß, der durch die Verschmutzung der Rastverbindung zwischen Triebwerk und Aufstecker durch Zahnputzmittel noch erhöht wird.

Es ist die Aufgabe dieser Erfindung, bei Vermeidung der vorerwähnten Nachteile, den Anwendungsbereich eines elektrischen Zahnbürstenantriebs durch eine Aufsteckvorrichtung, mit deren Hilfe die Zähne poliert und die Interdentalräume gereinigt werden können, zu erweitern, wobei das als Polier- und/oder Reinigungseinrichtung ausgebildete Zahnbehandlungswerkzeug ausschließlich Drehschwingungen ausführt.

Gelöst wird diese Aufgabe durch die kennzeichnenden Merkmale des Anspruchs 1.

Durch die erfindungsgemäße Aufsteckvorrichtung wird erreicht, daß der Anwendungsbereich eines elektrischen Zahnbürstenantriebs erweitert wird. Zusätzlich zu den herkömmlichen aufsteckbaren Zahnbürsten, die bereits eine Radial- und Longitudinalbewegung ausführen, können mit dem gleichen Triebwerk Einrichtungen, z. B. zum Polieren der Zähne oder zum Reinigen der Interdentalräume, angetrieben werden, die ausschließlich Drehschwingungen ausführen. Im Betrieb steht der im Inneren der erfindungsgemäßen Aufsteckvorrichtung gelagerte Schwingarm mit seinem einen Ende mit der Antriebswelle des Triebwerks und mit seinem der Antriebswelle abgewandten Ende mit dem Radialtrieb für ein Zahnbehandlungswerkzeug in Wirkverbindung. Die Antriebswelle führt aus Axial- und Radialkomponenten bestehende Drehbewegungen aus, die über den aus Schwingarm, Drehschwingteller, Steckachse und Stecköffnung bestehenden Bewegungswandler in eine Drehschwingungen ausführende Bewegung des Drehschwingtellers umgewandelt wird. Mit dem Drehschwingteller ist eine Polier- und/oder Reinigungseinrichtung verbunden, die ausschließlich Drehschwingungen ausführt. Das der Antriebswelle des Triebwerks abgewandte Ende der Aufsteckvorrichtung ist als zweiteiliges Lager für den Radialtrieb ausgebildet, wobei ein Lagerteil Bestandteil des Gehäuses und der andere Lagerteil als Kappe ausgebildet ist, die mittels Schnappverbindung an dem Gehäuse lösbar befestigt ist. Vorteilhaft besteht die erfindungsgemäße Aufsteckvorrichtung nur aus vier Einzelteilen, die als Kunststoffspritzteile kostengünstig herstellbar und ohne zusätzliche Werkzeuge einfach montierbar sind.

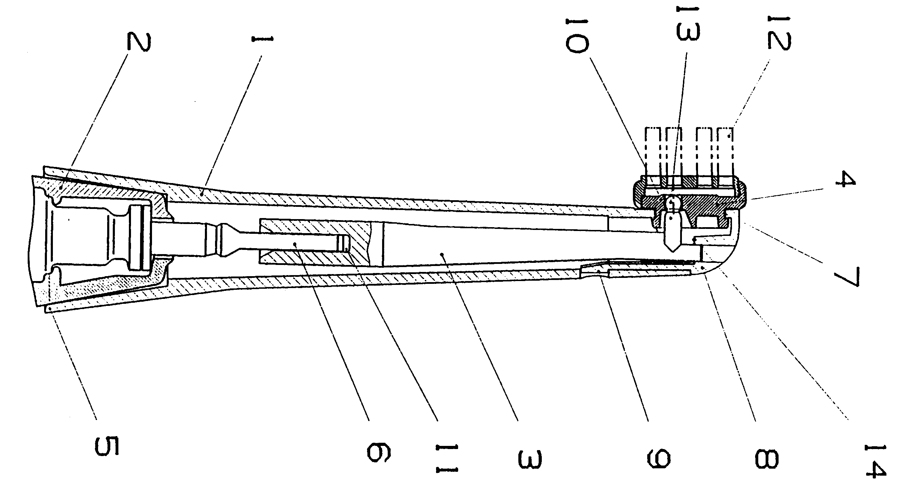

Ein Ausführungsbeispiel der Erfindung ist in der Zeichnung dargestellt und wird nachfolgend beschrieben.

Die dargestellte Aufsteckvorrichtung besteht aus einem Gehäuse 1, in dem ein im wesentlichen einen Schwingarm 3 und einen Drehschwingteller 4 aufweisender Bewegungswandler 3,4 frei beweglich gelagert ist. Die Aufsteckvorrichtung ist mittels einer Rastverbindung 5 an einem Zahnbürstenantrieb 2 lösbar gehaltert. Der Schwingarm 3 steht in Wirkverbindung mit der Antriebswelle 6 des Zahnbürstenantriebs 2. Das der Rastverbindung 5 abgewandte Ende des Gehäuses 1 ist als zweiteiliges Drehlager 7 für den Drehschwingteller 4 ausgebildet, wobei eine Hälfte des Drehlagers 7 die Form einer Kappe 8 hat, die mittels einer Schnappverbindung 9 mit dem Gehäuse 1 verbunden ist. Am Schwingarm 3 ist vorzugsweise rechtwinklig zur Achse des Schwingarms 3 eine Steckachse 10 angeordnet, über die der Schwingarm 3 mit dem Drehschwingteller 4 in Wirkverbindung steht. An der Kappe 8 ist ein Begrenzungsanschlag 14 für die Steckachse 10 vorgesehen. Das der Steckachse 10 abgewandte Ende des Schwingarms 3 ist als Führung 11 für die Antriebswelle 6 des Zahnbürstenantriebs 2 ausgebildet. Im Betrieb wird die Axial- und Radialkomponenten aufweisende Drehbewegung der Antriebswelle 6 in eine Drehschwingungen um die Steckachse 10 durchführende Bewegung des Drehschwingtellers 4 umgewandelt. Vorteilhaft ist hierbei, daß der resultierende Drehwinkel, um den der Drehschwingteller 4 jeweils oszilliert, größer ist als der radiale Schwingwinkel der Antriebswelle 6. Die Umwandlung erfolgt über den mit der Antriebswelle 6 verbundenen Schwingarm 3 und die daran angeordnete Steckachse 10, die über eine exzentrisch angeordnete Stecköffnung 13 mit dem Drehschwingteller 4 in Wirkverbindung steht. Durch geeignete Dimensionierung der Länge der Steckachse 10 und des Maßes der Exzentrizität der Stecköffnung 13 läßt sich das Übersetzungsverhältnis des Bewegungswandlers einstellen. Das an dem Drehschwingteller 4 gehalterte Zahnbehandlungswerkzeug 12 führt dadurch eine um einen Drehwinkel oszillierende Drehbewegung aus.

## Patentansprüche

1. Aufsteckvorrichtung, insbesondere für einen elektrischen Zahnbürstenantrieb, mit einem Gehäuse (1) sowie einem im Gehäuse angeordneten Bewegungswandler, **dadurch gekennzeichnet,** daß der Bewegungswandler (3,4,10,13) einen mittels einer Führung (11) mit einer Antriebswelle (6) des Zahnbürstenantriebs (2) in Wirkverbindung stehenden Schwingarm (3) mit einer am distalen Ende vorzugsweise rechtwinklig angeordneten Steckachse (10) sowie einen mittels einem Drehlager (7) am Gehäuse (1) gelagerten Drehschwingteller (4) mit einer exzentrisch angeordneten Stecköffnung (13) aufweist, in welche die Steckachse (10) eingreift, wobei eine Axial- und Radialkomponenten aufweisende Bewegung der Antriebswelle (6) in eine Drehschwingungen um die Steckachse (10) durchführende Bewegung des Drehschwingtellers (4) umgewandelt wird.

2. Aufsteckvorrichtung nach Anspruch 1, **dadurch gekennzeichnet,** daß das der Antriebswelle (6) abgewandte Ende des Gehäuses (1) als zweiteiliges Drehlager (7) für den Drehschwingteller (4) ausgebildet ist, wobei ein Teil des Drehlagers (7) die Form einer Kappe (8) hat, die mittels Schnappverbindung (9) lösbar an dem Gehäuse (1) befestigbar ist.

3. Aufsteckvorrichtung nach den Ansprüchen 1 und 2, **dadurch gekennzeichnet,** daß ein Zahnbehandlungswerkzeug (12) lösbar mit dem Drehschwingteller (4) verbindbar ist.

## Claims

1. Attachment device, in particular for an electric toothbrush drive, with a housing (1) and a movement converter disposed in the housing, characterised in that the movement converter (3, 4, 10, 13) comprises a swing arm (3), which is operatively connected to a drive shaft (6) of the toothbrush drive (2) by means of a guide (11) and has a plug-in pin (10) disposed at the distal end and preferably at a right angle, as well as a rotary oscillating plate (4), which is mounted by means of a pivot bearing (7) at the housing (1) and has an eccentrically disposed plug-in hole (13) in which the plug-in pin (10) engages, wherein a movement of the drive shaft (6) having axial and radial components is converted into a movement of the rotary oscillating plate (4) executing rotary oscillations about the plug-in pin (10).

2. Attachment device according to claim 1, characterised in that the end of the housing (1) which is remote from the drive shaft (6) is formed as a two-part pivot bearing (7) for the rotary oscillating plate (4), wherein one part of the pivot bearing (7) is in the form of a cap (8), which can be detachably secured to the housing (1) by means of a snap-action connection (9).

3. Attachment device according to claims 1 and 2, characterised in that a dental treatment tool (12) can be detachably connected to the rotary oscillating plate (4).

## Revendications

1. Dispositif d'embrochement, en particulier pour la commande de brosse à dents électrique, avec un boîtier (1) et un convertisseur de mouvement logé dans le boîtier, caractérisé en ce que le convertisseur de mouvement (3, 4, 10, 13) comporte
- un bras oscillant (3) qui coopère par l'intermédiaire d'un élément de guidage (11) avec l'arbre d'entraînement (6) de la commande (2) de la brosse à dents et qui est pourvu à son extrémité éloignée du milieu d'un demi-arbre (10) disposé de préférence perpendiculairement, et,
- un disque d'oscillation tournant (4), qui est monté sur le boîtier par un coussinet de pivotement (7) et qui est pourvu d'une ouverture d'embrochement (13) dans laquelle s'engage le demi-arbre (10),
où le mouvement de l'arbre d'entraînement (6), à composantes axiales et radiales, est converti en un mouvement du disque d'oscillation (4) tournant autour du demi-arbre (10).

2. Dispositif d'embrochement selon la revendication 1 caractérisé en ce que l'extrémité du boîtier (1) éloignée de l'arbre d'entraînement (6) présente une conformation de coussinet de pivotement (7) en deux parties, destiné au disque d'oscillation tournant (4), une partie dudit coussinet de pivotement (7) ayant une forme de calotte (8) pouvant être fixée par encliquetage sur le boîtier (1) tout en étant amovible.

3. Dispositif d'embrochement selon les revendications 1 et 2 caractérisé en ce qu'un outil de traitement des dents (12) peut être assemblé de manière amovible avec le disque d'oscillation tournant (4).
